# EUROPÄISCHE PATENTANMELDUNG

(11) **EP 1 426 233 A1**
(43) Veröffentlichungstag der Anmeldung: **09.06.2004**
(21) Anmeldenummer: 03020062.0
(22) Anmeldetag: 04.09.2003
(51) Int. Cl.: B60N 3/10

(54) **Halter für einen Getränkebehälter**

(30) Priorität: 04.12.2002 DE 20218745 U
(71) Anmelder: fischer automotive systems GmbH, 72160 Horb a.N. (DE)
(72) Erfinder: Leopold, Gunter, 72270 Baiersbronn (DE)

(57) **Zusammenfassung**

Die Erfindung betrifft einen Halter (1) für einen Getränkebehälter (2), mit einer Behälteraufnahme (3) und Klemmelementen (12) mit federnd radial wegdrückbaren und in die Behälteraufnahme (3) hineinragenden Halteelementen (7). Um die Halteeigenschaften eines derartigen Halters zu verbessern, schlägt die Erfindung vor, dass jedes Halteelement (7) mindestens zwei vertikal versetzte Klemmpunkte (14, 15) aufweist und mittels eines Federelementes (9) derart befestigt ist, dass je ein Halteelement (7) und ein Federelement (9) ein horizontal kippbares Klemmelement (12) bilden.

## Beschreibung

Die Erfindung betrifft einen Halter für einen Getränkebehälter mit den Merkmalen des Oberbegriffs des Anspruchs 1.

Aus dem Stand der Technik sind eine Vielzahl derartiger Halter mit einer topfförmigen Behälteraufnahme für Tassen, Becher, Getränkedosen, Flaschen oder dgl. bekannt. Die bekannten Halter weisen ein oder mehrere, zum Teil über den Umfang verteilt angeordnete Klemmelemente in Form von Klappen, Haltebacken oder dgl. auf. Diese ragen in das Innere der topfförmigen Behälteraufnahme hinein, können aufgrund einer Federung von der Umfangsfläche eines Getränkebehälters radial weggedrückt werden und geben durch Klemmung dem Getränkebehälter Halt. Ein derartiger Halter ist beispielsweise in DE 100 15 197.3 beschrieben. Das entsprechende Klemmelement besteht aus einer Ausgleichsklappe, die federnd über ein Schwenklager befestigt ist. Ein derartiges Klemmeelement hat jedoch den Nachteil, dass die Ausgleichsklappe nur an Klemmpunkten im Wesentlichen gleicher Höhe klemmt und daher besonders hohen Getränkebehältern häufig nur unzureichenden Halt gibt.

Der Erfindung liegt daher die Aufgabe zugrunde, einen Halter für einen Getränkebehälter der eingangs genannten Art zu schaffen, der verbesserte Halteeigenschaften aufweist.

Diese Aufgabe wird erfindungsgemäß durch die Merkmale des Anspruchs 1 gelöst. Der erfindungsgemäße Halter weist Halteelemente mit jeweils mindestens zwei Klemmpunkten auf, wobei die Klemmpunkte vertikal zueinander versetzt sind. Die Halteelemente sind über ein Federelement am Gehäuse des Halters befestigt, so dass jeweils ein Halteelement und ein Federelement ein Klemmelement bilden. Das Federelement dient einerseits der radialen Federung des Halteelements und andererseits dessen horizontaler Verkippung. Hierdurch wird einerseits ein Durchmesserausgleich für unterschiedliche Getränkebehältergrößen erreicht.

Andererseits wird durch die Verkippbarkeit des Halteelements erreicht, dass sich das Halteelement, insbesondere bei nicht-zylindrischen Getränkebehältern, auch in vertikaler Richtung an den Getränkebehälter anpasst.

Vorzugsweise ist das Federelement ein Federdraht und die Halteelemente weisen je zwei zueinander versetzte Bohrungen auf, in die die zwei freien Enden je eines Federdrahts eingreifen. Um dabei ein bistabiles System zu erreichen, weist der Federdraht je zwei Schenkel mit den in die Bohrungen eingreifenden freien Enden auf, wobei zumindest ein Abschnitt jedes Schenkels in Versatzrichtung der Bohrungen verläuft und die beiden Schenkel in diesem Abschnitt zueinander unter Vorspannung stehen. Mit bistabil ist gemeint, dass sich aus der Anordnung und der Vorspannung zwei stabile Zustände für das Klemmelement einstellen können. Während ein Zustand, bei dem die zwei genannten Abschnitte der Schenkel und die Bohrungen in einer Ebene liegen, instabil ist, wird durch Verkippen des Haltelements in die eine oder andere Richtung jeweils ein stabiler Zustand erreicht. Die Vorspannung kann durch entsprechende elastische Verformung beim Fügen der Federdrähte in die Halteelemente erzeugt werden. Vorzugsweise sind die zwei Bohrungen vertikal zueinander versetzt, so dass der Federdraht zwei Schenkel mit je einem vertikal verlaufenden Abschnitt aufweist, die in vertikal gegeneinander in Vorspannung gebracht sind. Durch das bistabile Verhalten wird beispielsweise für taillierte Flaschen eine deutliche Verbesserung des Halts erreicht, wenn beim Einführen der Flasche der Kipppunkt des bistabilen Systems überschritten wird und hierdurch die radiale Federwirkung durch eine Momentenwirkung verstärkt wird.

Die Erfindung wird nachfolgend anhand eines in der Zeichnung dargestellten Ausführungsbeispiels näher erläutert. Es zeigen:
- Figur 1: einen erfindungsgemäßen Halter in einer perspektivischen Darstellung mit einem Teilausschnitt;
- Figur 2: den Federdraht dieses Halters im Einbauzustand.

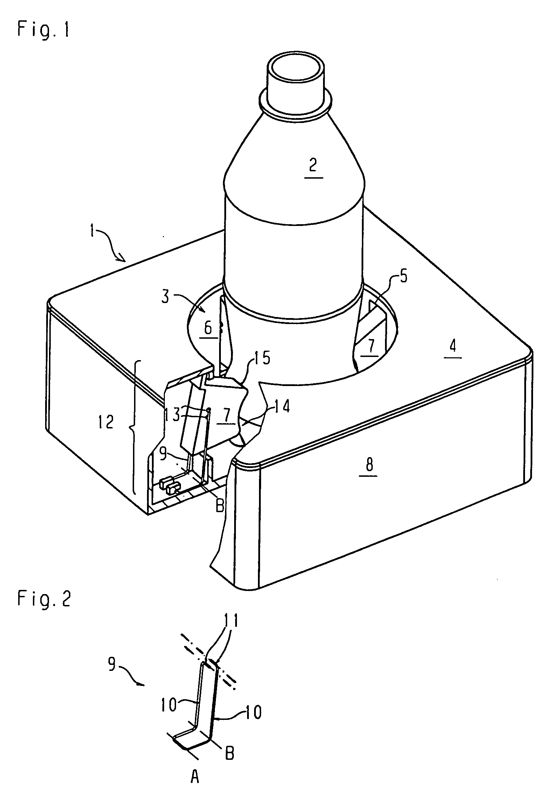

Der in Figur 1 dargestellte Halter 1 ist zum Einbau in ein Kraftfahrzeug vorgesehen und kann zum Halten einer Flasche 2 oder anderer Getränkebehälter wie beispielsweise Tassen, Becher, Getränkedosen oder dgl. verwendet werden. Er weist eine topfförmige Behälteraufnahme 3 auf. An einer offenen Oberseite der Behälteraufnahme 3 weist der Halter 1 einen Deckel 4 auf. Alternativ könnte die Behälteraufnahme einstückig in eine flanschartige Blende übergehen, die zum Verschließen einer Einbauöffnung für den Halter 1 im Kraftfahrzeug vorgesehen ist. In Öffnungen 5 der inneren Umfangswand 6 der Behälteraufnahme 3 sind vier Halteelemente 7 über den Umfang verteilt angeordnet. Die Halteelemente 7 verengen die lichte Weite der Behälteraufnahme 3 und geben klemmend der Flasche 2 Halt. Sie sind am Gehäuse 8 des Halters über Federdrähte 9 befestigt. Figur 2 zeigt einen Federdraht 9 im Einbauzustand. Er weist insbesondere zwei vertikale Schenkel 10 sowie die beiden freien Enden 11 auf. Die Mittelachsen der freien Enden 11 sind vertikal zueinander versetzt. Im Fertigungszustand des Federdrahts 9, d. h. vor dessen Montage, ist er um die Achse A tordiert. Bei Fügen wird die dargestellte Geometrie durch elastische Verformung erzwungen, wodurch die beiden vertikalen Schenkel 10 gegeneinander vorgespannt sind. Die freien Enden 11 greifen in zwei vertikal zueinander versetzte Bohrungen 12 des Halteelements 7 ein. Hierdurch bilden das Halteelement 7 und das Federelement 9 ein bistabil horizontal kippbares Klemmelement 12. Ein Zustand, bei dem die beiden Schenkel 10 parallel zueinander stehen bzw. die Schenkel 10, die freien Enden 11 und die Bohrungen 12 in einer Ebene liegen, ist aufgrund der Zug- bzw. Druckspannungen in den Schenkeln 10 instabil. Das System kann zu zwei Seiten kippen, indem sich die Schenkel 10 um die Achse A entgegengesetzt zueinander verdrehen. Hierdurch wird das Halteelement 7 um seine horizontale, tangential zur Flasche stehenden Achse gekippt. Der erreichbare Kippwinkel hängt im Wesentlichen von der Vorspannung der beiden Schenkel 10 ab. So lange kein Getränkebehälter in den Halter 1 eingestellt ist, werden die Halteelemente 7 üblicherweise derart gekippt sein, dass die untere Klemmstelle 14 weiter radial nach innen weist als die obere Klemmstelle 15. Beim Einstellen der Flasche 2 werden die Halteelemente 7 radial nach außen gedrückt, d. h. beide Schenkel 10 des Federdrahtes 9 werden elastisch um die Achse B verdreht. In Abhängigkeit von der Geometrie der Flasche 2 und der hierdurch an den Klemmstellen 14 und 15 wirkenden Kräften passt sich die horizontale Neigung der Halteelemente 7 an und kippt ggf. über den instabilen Neigezustand, wie beispielsweise hier dargestellt. Hierdurch wird ein sehr guter Halt der taillierten Flasche 2 erreicht, da zum Herausnehmen der Flasche 2 der instabile Zustand überwunden werden muss. Die Halteelemente 7 klemmen also nicht nur über die radial wirkende Federung des Federdrahts 9, sondern auch über das Kippmoment, das in den Halteelementen 7 durch die in den Schenkeln 10 wirkenden Kräfte erzeugt wird.

## Patentansprüche

1. Halter (1) für einen Getränkebehälter (2), mit einer Behälteraufnahme (3) und Klemmelementen (12) mit federnd radial wegdrückbaren und in die Behälteraufnahme (3) hineinragenden Halteelementen (7), **dadurch gekennzeichnet, dass** jedes Halteelement (7) mindestens zwei vertikal versetzte Klemmpunkte (14, 15) aufweist und mittels eines Federelementes (9) derart befestigt ist, dass je ein Halteelement (7) und ein Federelement (9) ein horizontal kippbares Klemmelement (12) bilden.

2. Halter nach Anspruch 1, **dadurch gekennzeichnet, dass** das Federelement (9) ein Federdraht (9) ist.

3. Halter nach Anspruch 2, **dadurch gekennzeichnet, dass** die Halteelemente (7) je zwei zueinander versetzte Bohrungen (13) aufweisen und wobei die Federdrähte (9) je zwei Schenkel (10) mit in die Bohrungen (13) eingreifenden freien Enden (11) aufweisen, wobei zumindest ein Abschnitt jedes Schenkels (10) in etwa in Versatzrichtung der Bohrungen verläuft und die beiden Schenkel (10) in dieser Richtung zueinander unter Vorspannung stehen.

4. Halter nach Anspruch 3, **dadurch gekennzeichnet, dass** die Bohrungen (13) im Wesentlichen vertikal zueinander versetzt sind.
